# EUROPEAN PATENT APPLICATION

(11) **EP 4 151 508 A1**
(43) Date of publication of application: **22.03.2023**
(21) Application number: 21885268.9
(22) Date of filing: 28.10.2021
(51) Int. Cl.: B62D 57/032

(54) **ROBOT LEG STRUCTURE HAVING COMPACT STRUCTURE AND QUADRUPED ROBOT APPLYING SAME**

(30) Priority: 29.10.2020 CN 202022454860 U
(71) Applicant: Hangzhou Yushu Technology Co., Ltd., Hangzhou City, Zhejiang Province 310053 (CN)
(72) Inventor: WANG, Xingxing, Hangzhou, Zhejiang 310053 (CN)
(74) Representative: Cabinet Beau de Loménie
(86) International application number: PCT/CN2021/127083
(87) International publication number: WO 2022/089541

(57) **Abstract**

Provided are a compact robot leg structure and a four-legged robot using the same. The robot leg structure includes a thigh rod (2) and a shank rod (3) rotationally connected to the thigh rod (2). By arranging a double-gear structure to replace a complex reducer structure, the rotation of the shank rod (3) relative to the thigh rod (2) is realized, thus further increasing the output torque of the shank rod (3), increasing the overall load of the robot, and reducing the power consumption of the motor.

## Description

### Technical Field

The present application relates to a compact robot leg structure and a four-legged robot using the same, and belongs to the technical field of robots.

### Background

Chinese patent (publication number: CN109176595A) discloses a highly integrated robot double-joint unit, including a first joint consisting of a first motor and reducer assembly, and a second joint consisting of a second motor assembly and a second reducer. A first output connecting rod is fixed on an output shaft of the first motor and reducer assembly. The second reducer is provided in the first output connecting rod. The second motor assembly drives the second reducer through a transmission rod.

An output end of the second reducer is provided with a second joint output rocker arm. A connecting rod is provided in the accommodating cavity. One end of the connecting rod is rotationally connected to the second joint output rocker arm. The other end is rotationally connected to the second output connecting rod. The second joint output rocker arm, the connecting rod, the first output connecting rod and the second output connecting rod jointly form connecting rod transmission, realizing the relative independent movement of the first output connecting rod and the second output connecting rod, and forming a double-joint structure.

### Summary

### Technical Problem

In the above scheme, the second joint output rocker arm is driven through the second reducer to achieve joint transmission. However, the reducer is an independent component consisting of gear transmission, worm transmission and gear worm transmission enclosed in the rigid housing, so the reducer transmission scheme requires many parts; At the same time, it is necessary to reserve the assembly space of the reducer, resulting in that the joint unit occupies a large space and cannot achieve a compact structure.

### Solution to Technical Problem

### Technical Scheme

Aiming at the defects of the existing technologies, the purpose of the present application is to provide a compact robot leg structure with a double-gear structure, which can realize high-torque rotation of a shank rod relative to a thigh rod, does not need to arrange a reducer, requires fewer parts and occupies a small space, and a four-legged robot using the same.

In order to achieve the purpose, one technical scheme adopted by the present application is as follows:

A compact robot leg structure, including a thigh rod and a shank rod rotationally connected to the thigh rod, the thigh rod driving the shank rod to rotate relative to the thigh rod through a shank power unit, wherein
an output end of the shank power unit is fixedly provided with a first gear;
the thigh rod is provided with a second gear engaged with the first gear;
the diameter of the reference circle of the second gear is larger than the diameter of the reference circle of the first gear;
the second gear is fixedly connected to a rocker arm;
a transmission part is provided between the rocker arm and the shank rod;
the shank power unit drives the second gear to output a large torque through the first gear;
the rocker arm connected to the second gear drives the shank rod to rotate relative to the thigh rod through the transmission part.

After continuous exploration and testing, the present application can realize the rotation of the shank rod relative to the thigh rod by arranging a double-gear structure to replace a complex reducer structure, thus further increasing the output torque of the shank rod, increasing the overall load of the robot and reducing the power consumption of the motor.

At the same time, compared with the existing technology, the present application requires fewer parts, occupies a smaller space and has a more compact structure.

As a preferred technical measure,
the second gear is an incomplete gear and is fixed coaxially with the rocker arm.

The second gear is an incomplete gear, thus reducing the space occupied in the thigh rod and making the overall structure more compact. At the same time, the weight is lighter and the cost is lower.

As a preferred technical measure,
the number of teeth of the incomplete gear is matched with a rotation angle of the shank rod relative to the thigh rod, thus further reducing the space occupied in the thigh rod and making the overall structure more compact.

As a preferred technical measure,
an area where the rocker arm is connected to the second gear is a sector structure and an area where the rocker arm is connected to the transmission part is a sheet structure.

By arranging the sector structure, the assembly space with the second gear is increased, thus making the connection between the two more firm and reliable.

By arranging the sheet structure, the space occupied by the rocker arm is reduced and the manufacturing cost of the rocker arm is reduced at the same time.

As a preferred technical measure,
the transmission part is a connecting rod, one end of the connecting rod is hinged with the rocker arm, and the other end is hinged with the shank rod. The structure is simple, the cost is low and the reliability is high.

As a preferred technical measure,
a limiting part is provided on a side of the thigh rod adjacent to the rocker arm;
the limiting part is located at a limit stroke of the rocker arm. The limitation is accurate and reliable through a mechanical structure.

As a preferred technical measure,
the limiting part is provided with a ductile material for absorbing limiting buffer. The buffer effect is good and the manufacturing cost is low.

As a preferred technical measure,
the shank power unit is a rotating motor and a fixed end of the rotating motor is assembled at an end of the thigh rod. The scheme is simple, practical and feasible.

In order to achieve the purpose, another technical scheme of the present application is as follows:

A compact robot leg structure, including a thigh rod and a shank rod rotationally connected to the thigh rod, the thigh rod driving the shank rod to rotate relative to the thigh rod through a shank power unit, wherein
an output end of the shank power unit is fixedly provided with a first gear;
the thigh rod is provided with a second gear engaged with the first gear;
the diameter of the reference circle of the second gear is larger than the diameter of the reference circle of the first gear;
the shank power unit drives the second gear through the first gear to drive the shank rod to rotate relative to the thigh rod.

After continuous exploration and testing, the present application can realize the rotation of the shank rod relative to the thigh rod by arranging a double-gear structure to replace a complex reducer structure.

In addition, the shank power unit drives the second gear through the first gear and the diameter of the reference circle of the second gear is larger than the diameter of the reference circle of the first gear, thus further increasing the output torque of the shank rod, increasing the overall load of the robot and reducing the power consumption of the motor.

As a preferred technical measure,
a four-legged robot includes the compact robot leg structure.

In the four-legged robot provided by the present application, a double-gear structure is added to the output end of the shank power unit, thus realizing the rotation of the shank rod relative to the thigh rod, further increasing the output torque of the shank rod, increasing the overall load of the four-legged robot and further reducing the power consumption of the motor.

### Beneficial Effects of the Present Application

### Beneficial Effects

After continuous exploration and testing, the present application can realize the rotation of the shank rod relative to the thigh rod by arranging a double-gear structure to replace a complex reducer structure, thus further increasing the output torque of the shank rod, increasing the overall load of the robot and reducing the power consumption of the motor.

### Brief Description of the Drawings

### Description of the Drawings

FIG. 1 illustrates a schematic structural diagram when a leg structure is fully opened according to the present application.
FIG. 2 illustrates a schematic structural diagram when a leg structure is fully closed according to the present application.

In the drawings, 1-shank power unit; 2-thigh rod; 3-shank rod; 4-first gear; 5-second gear; 6-rocker arm; 7-transmission part; 8-limiting part.

### Detailed Description of the Embodiments

### Description of the Embodiments

In order to make the purposes, technical schemes and advantages of the present application more clear, the present application will be further described in detail below in combination with the embodiments with reference to the drawings. It should be understood that the specific embodiments described herein are only intended to explain the present application, rather than to limit the present application.

On the contrary, the present application covers any replacement, modification, equivalent methods and schemes defined by the claims based on the essence and scope of the present application. Further, in order to make the public have a better understanding of the present application, some specific details will be described in detail in the following detailed description of the present application. The present application can be fully understood by those skilled in the art without the description of these details.

It should be noted that when two components are "fixedly connected", the two components may be directly connected or there may be an intermediate component. On the contrary, when a component is called "directly" "on" another component, there is no intermediate component. The terms "up", "down" and similar expressions used herein are for descriptive purposes only.

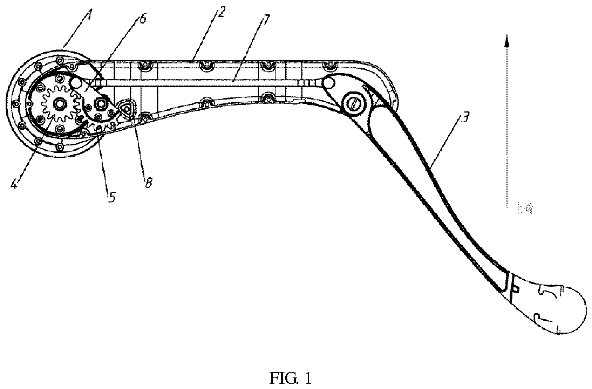

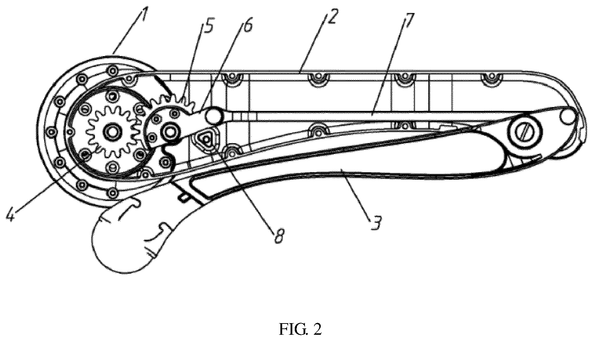

Referring to FIG. 1-2, a compact robot leg structure includes a thigh rod 2 and a shank rod 3 rotationally connected to the thigh rod 2. The thigh rod 2 drives the shank rod 3 to rotate relative to the thigh rod 2 through a shank power unit 1.

An output end of the shank power unit 1 is fixedly provided with a first gear 4.

The thigh rod 2 is provided with a second gear 5 engaged with the first gear 4. At least one parts of the first gear 4 and the second gear 5 are located in the same plane, so that they can be effectively engaged.

The diameter of the reference circle of the second gear 5 is larger than the diameter of the reference circle of the first gear 4.

The second gear 5 is fixedly connected to a rocker arm 6.

A transmission part 7 is provided between the rocker arm 6 and the shank rod 3.

The shank power unit 1 drives the second gear 5 to output a large torque through the first gear 4.

The rocker arm 6 connected to the second gear 5 drives the shank rod 3 to rotate relative to the thigh rod 2 through the transmission part 7.

After continuous exploration and testing, the present application can realize the rotation of the shank rod 3 relative to the thigh rod 2 by arranging a double-gear structure to replace a complex reducer structure, thus further increasing the output torque of the shank rod 3, increasing the overall load of the robot and reducing the power consumption of the motor.

At the same time, compared with the existing technology, the present application requires fewer parts, occupies a smaller space and has a more compact structure.

Specific embodiment of structure of second gear 5 according to the present application:
The second gear 5 is an incomplete gear and is fixed coaxially with the rocker arm 6.

The second gear 5 is an incomplete gear, thus reducing the space occupied in the thigh rod 2 and making the overall structure more compact. At the same time, the weight is lighter and the cost is lower.

The number of teeth of the incomplete gear is matched with a rotation angle of the shank rod 3 relative to the thigh rod 2, thus further reducing the space occupied in the thigh rod 2 and making the overall structure more compact.

Specific embodiment of structure of rocker arm 6 according to the present application:
An area where the rocker arm 6 is connected to the second gear 5 is a sector structure and an area where the rocker arm 6 is connected to the transmission part 7 is a sheet structure.

By arranging the sector structure, the assembly space with the second gear is increased, thus making the connection between the two more firm and reliable.

By arranging the sheet structure, the space occupied by the rocker arm 6 is reduced and the manufacturing cost of the rocker arm 6 is reduced at the same time.

The rocker arm 6 is superposed on the second gear 5, thus realizing the effective drive of the second gear 5 to the rocker arm 6, reducing the occupied space, and making the structure of the present application more compact.

Specific embodiment of structure of transmission part 7 according to the present application:

The transmission part 7 is a connecting rod, one end of the connecting rod is hinged with the rocker arm, and the other end is hinged with the shank rod 3. The structure is simple, the cost is low and the reliability is high.

Specific embodiment of limiting part 8 additionally arranged according to the present application:
A limiting part 8 is provided on a side of the thigh rod 2 adjacent to the rocker arm 6.

The limiting part 8 is located at a limit stroke of the rocker arm 6. The limitation is accurate and reliable through a mechanical structure.

The limiting part 8 is provided with a ductile material for absorbing limiting buffer. The ductile material may be rubber, its buffer effect is good and the manufacturing cost is low.

Specific embodiment of structure of shank power unit 1 according to the present application:
The shank power unit 1 is a rotating motor and a fixed end of the rotating motor is assembled at an upper end of the thigh rod 2. The scheme is simple, practical and feasible.

Specific embodiment of using the compact robot leg structure according to the present application:
A four-legged robot includes the compact robot leg structure.

In the four-legged robot provided by the present application, a double-gear structure is added to the output end of the shank power unit 1, thus realizing the rotation of the shank rod 3 relative to the thigh rod 2, further increasing the output torque of the shank rod 3, increasing the overall load of the four-legged robot and further reducing the power consumption of the motor.

In the present application, the fixed connection mode may be screw connection, welding, riveting, insertion connection or connection through a third component, which may be selected by those skilled in the art according to the actual situation.

What are described above are only preferred embodiments of the present application, which are not intended to limit the present application. Any modification, equivalent replacement and improvement made within the spirit and principle of the present application should be included in the scope of protection of the present application.

## Claims

1. A compact robot leg structure, comprising a thigh rod (2) and a shank rod (3) rotationally connected to the thigh rod (2), the thigh rod (2) driving the shank rod (3) to rotate relative to the thigh rod (2) through a shank power unit (1), wherein
an output end of the shank power unit (1) is fixedly provided with a first gear (4);
the thigh rod (2) is provided with a second gear (5) engaged with the first gear (4);
the diameter of the reference circle of the second gear (5) is larger than the diameter of the reference circle of the first gear (4);
the second gear (5) is fixedly connected to a rocker arm (6);
a transmission part (7) is provided between the rocker arm (6) and the shank rod (3); the shank power unit (1) drives the second gear (5) to output a large torque through the first gear (4);
the rocker arm (6) connected to the second gear (5) drives the shank rod (3) to rotate relative to the thigh rod (2) through the transmission part (7).

2. The compact robot leg structure according to claim 1, wherein
the second gear (5) is an incomplete gear and is fixed coaxially with the rocker arm (6).

3. The compact robot leg structure according to claim 2, wherein
the number of teeth of the incomplete gear is matched with a rotation angle of the shank rod (3) relative to the thigh rod (2).

4. The compact robot leg structure according to claim 1, wherein
an area where the rocker arm (6) is connected to the second gear (5) is a sector structure and an area where the rocker arm (6) is connected to the transmission part (7) is a sheet structure.

5. The compact robot leg structure according to claim 1, wherein
the transmission part (7) is a connecting rod, one end of the connecting rod is hinged with the rocker arm (6), and the other end is hinged with the shank rod (3).

6. The compact robot leg structure according to any one of claims 1-5, wherein
a limiting part (8) is provided on a side of the thigh rod (2) adjacent to the rocker arm (6);
the limiting part (8) is located at a limit stroke of the rocker arm (6).

7. The compact robot leg structure according to claim 6, wherein
the limiting part (8) is provided with a ductile material for absorbing limiting buffer.

8. The compact robot leg structure according to claim 7, wherein
the shank power unit (1) is a rotating motor and a fixed end of the rotating motor is assembled at an end of the thigh rod (2).

9. A compact robot leg structure, comprising a thigh rod (2) and a shank rod (3) rotationally connected to the thigh rod (2), the thigh rod (2) driving the shank rod (3) to rotate relative to the thigh rod (2) through a shank power unit (1), wherein
an output end of the shank power unit (1) is fixedly provided with a first gear (4);
the thigh rod (2) is provided with a second gear (5) engaged with the first gear (4); the diameter of the reference circle of the second gear (5) is larger than the diameter of the reference circle of the first gear (4);
the shank power unit (1) drives the second gear (5) through the first gear (4) to drive the shank rod (3) to rotate relative to the thigh rod (2).

10. A four-legged robot, comprising the compact robot leg structure according to any one of claims 1-9.
